# FASCICULE DE BREVET EUROPEEN

(11) **EP 2 529 330 B1**
(45) Date de publication et mention de la délivrance du brevet: **14.08.2019**
(21) Numéro de dépôt: 11714343.8
(22) Date de dépôt: 26.01.2011
(51) Int. Cl.: G06F 21/42

(54) **PROCÉDÉ DE FOURNITURE D'UN CODE DYNAMIQUE PAR L'INTERMÉDIAIRE D'UN TÉLÉPHONE**
VERFAHREN ZUR BEREITSTELLUNG EINES DYNAMISCHEN CODES ÜBER EIN TELEFON
METHOD FOR PROVIDING A DYNAMIC CODE VIA A TELEPHONE

(30) Priorité: 28.01.2010 FR 1000347
(43) Date de publication de la demande: 05.12.2012
(73) Titulaire: Paycool International Ltd., Hong Kong S.A.R. (CN)
(72) Inventeur: BARTHELEMY, Serge, F-84000 Montpellier (FR)
(74) Mandataire: Nicolle, Olivier
(86) Numéro de dépôt international: PCT/FR2011/000054
(87) Numéro de publication internationale: WO 2011/095704

(56) Documents cités:
- EP-A1- 1 739 588
- GB-A- 2 362 489

## Description

La présente invention concerne un procédé de génération, de livraison et de contrôle de Code Dynamique. Le procédé est du type dans lequel le Code Dynamique est mis à disposition d'un utilisateur notamment via un téléphone mobile ou fixe. Le Code Dynamique pourra alors être utilisé par exemple pour authentifier l'utilisateur auprès du serveur d'un service en ligne, ou pour tout autre usage nécessitant l'obtention d'un Code Dynamique.

### ETAT DE LA TECHNIQUE

Dans l'économie numérique le nombre de services en ligne et d'applications se développe fortement et l'accès à ces services comme la validation de certaines actions requiert soit l'authentification des utilisateurs soit la validation numérique de certaines actions, voire la signature numérique.

La mise en oeuvre de ces procédés d'authentification auprès de services en ligne, ou de validation de signature, fait très souvent intervenir l'utilisation d'un mot de passe ou Code Dynamique (encore appelé « One Time Password » en terminologie anglo-saxonne) qui est vérifié directement ou indirectement soit par l'entité qui le requiert (par exemple un service en ligne), soit par un tiers indépendant.

En particulier, il existe une demande croissante de la part d'opérateurs de services en ligne, comme par exemple des banques, pour des méthodes d'authentification plus sûres permettant notamment d'augmenter la sécurité vis-à-vis d'attaques du type hameçonnage consistant à obtenir par ruse le mot de passe statique d'un utilisateur auprès d'un service en ligne. L'augmentation de cette sécurité passe par l'abandon des mots de passe statiques et leur remplacement par des mots de passe dynamiques ou des méthodes d'authentification à plusieurs facteurs utilisant des codes à usage unique.

Or il existe déjà différents procédés pour générer et fournir à un utilisateur un Code Dynamique, par exemple par :
- génération d'un code ou mot de passe à partir d'un outil dédié, comme celui commercialisé sous la marque « SecureID » de RSA. Cet outil permet de calculer et d'afficher un code qui varie en fonction du temps, par exemple toutes les 60 secondes;
- génération d'un Code Dynamique à partir de calculettes cryptographiques utilisant des cartes à puce;
- envoi par SMS (« Short Message Service » en terminologie anglo-saxonne) d'un Code Dynamique sur un téléphone mobile de l'utilisateur;
- génération d'un Code Dynamique à partir d'une application logicielle spécifique installée sur le téléphone mobile ou la carte SIM du téléphone; une telle solution a été décrite dans la demande de brevet français n° FR 08/00440 de la même demanderesse.

GB2362489 décrit un procédé pour valider une instruction d'achat sur un serveur. La plupart de ces méthodes connues présentent bien entendu une sécurité accrue par rapport à l'usage de codes statiques, mais il demeure un ou plusieurs inconvénients dont le principal est très souvent le coût d'utilisation, soit parce que l'outil de génération de Code Dynamique est lui-même coûteux, soit parce que le coût d'acheminement d'un tel code vers l'utilisateur est significatif (par exemple le coût d'un SMS pour l'envoi de chaque nouveau code). A cela s'ajoute l'inconvénient supplémentaire que les banques ou autres organismes offrant des services en ligne, ne savent pas à l'avance quel nombre de codes à usage unique sera nécessaire, et par conséquent quel sera le coût correspondant, puisque ce nombre dépend uniquement du nombre de cas d'utilisation de ces codes.

### BUT DE L'INVENTION

La présente invention a par conséquent comme but général d'apporter une solution aux problèmes posés par les systèmes de fourniture et d'acheminement de codes à usage unique utilisés jusqu'à présent. L'invention est définie dans les revendications ci-après.

Un autre but plus spécifique de l'invention est de proposer un procédé de fourniture de Codes Dynamiques permettant de s'affranchir des problématiques de déploiement et de coût, afin de permettre un usage massif des Codes Dynamiques dans le cadre des infrastructures pour Services en Ligne.

Afin d'assurer une meilleure clarté de la description qui s'ensuit de l'invention, il est utile d'introduire un certain nombre de définitions des principaux éléments qui participent à la mise en oeuvre du procédé.

**Service en Ligne:** il s'agit d'un service ou d'une application disponible ou fourni de manière numérique par l'intermédiaire d'un réseau numérique (de type Internet ou équivalent, réseau de télécommunication, etc.) et qui demande à ses utilisateurs de saisir un Code Dynamique pour valider certaines de leurs actions (par exemple un code dit de « login » pour permettre l'accès au service, ou la fourniture d'un code d'authentification dans le cadre d'un procédé d'authentification à plusieurs facteurs, ou pour la validation de transactions ou la signature numérique, etc.).

**Serveur de Codes** : il s'agit d'un serveur informatique disposant :
- de capacités de connexions sécurisées avec un ou plusieurs Services en Ligne,
- de capacités de gestion et de traitements de données,
- de connexions avec un ou plusieurs réseaux de téléphonie vocale,
- d'un accès à un nombre significativement important de lignes téléphoniques appelantes (avantageusement plusieurs milliers ou dizaines de milliers de lignes), dites lignes disponibles,
- d'un programme et d'un algorithme capables de réaliser, sur sollicitation d'un Service en Ligne, la sélection d'un numéro de ligne apte à répondre à la dite sollicitation (parmi les lignes disponibles) et de déclencher un appel depuis la ligne sélectionnée vers le numéro de téléphone d'un Utilisateur.

Le Serveur de Codes au sens de l'invention peut être opéré soit par le Service en Ligne soit par une entité indépendante du Service en Ligne.

**Lignes Disponibles** : il s'agit de lignes téléphoniques disposant chacune d'un numéro de téléphone différent, mises à la disposition (de manière permanente ou temporaire) du Serveur de Codes et à partir desquelles celui-ci peut réaliser des appels vers les téléphones des Utilisateurs.

**Ligne Appelante** : c'est la ligne sélectionnée par le Serveur de Codes, en fonction des paramètres fournis par le Service en Ligne dans sa demande de Code Dynamique. La Ligne Appelante est sélectionnée parmi les Lignes Disponibles pour réaliser un appel vers le téléphone d'un Utilisateur, et dont le numéro doit s'afficher sur ledit téléphone, ou tout dispositif équivalent apte à recevoir un appel téléphonique, comme par exemple un ordinateur pourvu d'un modem.

**Utilisateur** : c'est une personne disposant d'une part d'un terminal réseau pour accéder à des Services en Ligne, et d'autre part d'un téléphone à usage personnel ou tout dispositif apte à recevoir un appel téléphonique et à afficher le numéro d'une Ligne Appelante. L'Utilisateur souhaite avoir accès à et/ou utiliser les fonctionnalités d'un Service en Ligne auquel il aura au préalable communiqué son numéro de téléphone.

**Code Dynamique** : il s'agit d'un code destiné à n'être utilisé directement ou indirectement que pour une seule action ou transaction entre l'Utilisateur et le Service en Ligne et dont la durée de validité est avantageusement limitée dans le temps (de l'ordre de quelques minutes).

### OBJET DE L'INVENTION

Ces buts sont atteints par le procédé selon l'invention. Afin de résoudre le problème posé, l'invention fait une utilisation innovante des Serveurs de Codes qui sont utilisés par les Services en Ligne. En effet, l'invention prévoit de générer des Codes Dynamiques qui sont ensuite transmis à l'Utilisateur par le Serveur de Codes, au moyen d'un appel vers le téléphone de l'Utilisateur à partir d'une Ligne Appelante choisie par le Serveur de Codes. Ce choix de Ligne Appelante est déterminé en fonction d'une spécification émise par le Service en Ligne.

En outre, le Code Dynamique est contenu dans, et transporté directement par le numéro de la Ligne Appelante qui est visualisé par l'Utilisateur sur son téléphone, tout en évitant de générer le coût d'un appel ou d'un SMS.

Il s'ensuit que dans l'invention, l'objet (le code) et son moyen de transmission (le numéro de la Ligne Appelante) sont confondus : c'est le moyen de transmission qui est le code.

Plus précisément, l'invention a pour objet un procédé de fourniture à l'Utilisateur d'un Service en Ligne, d'un Code Dynamique par l'intermédiaire d'un téléphone, dans lequel ledit Utilisateur fournit d'une part un identifiant à un serveur informatique opérant un Service en Ligne, au moyen d'un terminal réseau connecté audit serveur informatique par un réseau numérique, et d'autre part un Code Dynamique destiné à être utilisé auprès du Service en Ligne, ledit procédé étant caractérisé en ce que le Code Dynamique est constitué par un sous-ensemble des chiffres composant le numéro d'une Ligne Appelante, sélectionnée par un Serveur de Codes parmi un ensemble de Lignes Disponibles pour appeler le téléphone de l'Utilisateur, et dont le numéro est transmis au Service en Ligne par le Serveur de Codes.

Avantageusement, le numéro de la Ligne Appelante, contenant le Code Dynamique, est déterminé par un algorithme mis en oeuvre par le Serveur de Codes, en fonction d'un ensemble de paramètres inclus dans une demande de Code Dynamique transmise par le Service en Ligne.

Pour un choix particulier des paramètres inclus dans la demande de Code Dynamique, la détermination du numéro de Ligne Appelante par le Serveur de Codes peut être réalisée par une sélection aléatoire du numéro de la Ligne Appelante parmi les numéros de Lignes Disponibles pour le Serveur de Codes.

Avantageusement, le Code Dynamique est déterminé à partir du numéro de Ligne Appelante utilisée par le Serveur de Codes pour appeler le téléphone de l'Utilisateur, par une règle d'extraction du Code Dynamique qui désigne les chiffres du numéro de téléphone de la Ligne Appelante à prendre en compte pour constituer le Code Dynamique.

La règle d'extraction du Code Dynamique peut être fixe, mais elle pourrait aussi varier et être redéfinie par le Service en Ligne à l'occasion de chaque demande de Code Dynamique.

A titre d'exemple, les chiffres constituant le Code Dynamique peuvent être constitués par les 4, 5 ou 6 derniers chiffres du numéro de la Ligne Appelante. Ceci permet très simplement à l'utilisateur de sélectionner parmi les chiffres du numéro de la Ligne Appelante, ceux correspondant au Code Dynamique, en appliquant la règle d'extraction fournie par son terminal réseau.

En variante, le Code Dynamique peut être constitué par les positions d'un sous-ensemble déterminé de chiffres pris parmi les chiffres constituant ledit numéro de téléphone de la Ligne Appelante, les positions des chiffres à prendre en considération pour le Code Dynamique étant indiquées dans le message transmis par le Service en Ligne au terminal réseau de l'Utilisateur.

Il existe deux modes d'extraction et d'utilisation du Code Dynamique à partir du numéro de Ligne Appelante, à savoir un mode manuel, et un mode plus automatisé faisant intervenir une application spécifique installée sur le Téléphone de l'Utilisateur.

Ainsi, dans un mode d'extraction manuel, l'Utilisateur pourra simplement visualiser le numéro de la Ligne Appelante qui s'affiche sur l'écran de son téléphone, et en extraire manuellement les chiffres du Code Dynamique, en fonction de la règle d'extraction qui s'affiche sur l'écran de son terminal réseau. Puis l'Utilisateur saisira les chiffres du Code Dynamique sur son terminal réseau, pour transmission du Code Dynamique au logiciel du Service en Ligne qui le comparera au Code Dynamique de référence obtenu par l'intermédiaire du Serveur de Codes.

Dans un autre mode d'utilisation, plus automatisé, le numéro de la Ligne Appelante peut être capturé, une fois l'appel réalisé, par une application logicielle installée à cet effet sur le téléphone de l'Utilisateur ou tout dispositif équivalent. Cette application extraira ensuite du numéro de la Ligne Appelante le Code Dynamique pour réaliser la tâche pour laquelle elle a été prévue, par exemple la création d'un autre code, la génération d'une signature numérique, etc.... L'extraction se fera soit en fonction d'une règle d'extraction prédéfinie dans le logiciel du téléphone de l'Utilisateur, soit d'une règle d'extraction communiquée par le Service en Ligne au téléphone de l'Utilisateur.

De façon plus détaillée, le procédé selon l'invention comporte en outre les étapes suivantes :
- Transmission par le Service en Ligne audit Serveur de codes, d'une demande d'envoi d'un Code Dynamique à un Utilisateur donné du Service en Ligne, ainsi que d'un ensemble de paramètres spécifiant le Code Dynamique;
- Transmission par le Service en Ligne d'un avis d'appel envoyé au terminal réseau de l'Utilisateur ;
- après la sélection par le Serveur de Codes d'un numéro de téléphone de Ligne Appelante, transmission par le Serveur de Codes du numéro de la Ligne Appelante ainsi sélectionnée au serveur du Service en Ligne, et extraction par ledit serveur, du Code Dynamique à partir du numéro de Ligne Appelante ;
- Déclenchement d'un appel téléphonique par le Serveur de Codes vers le téléphone de l'Utilisateur, en utilisant le numéro de Ligne Appelante préalablement sélectionnée;
- A réception de l'appel téléphonique par le téléphone de l'Utilisateur, extraction manuelle ou automatique du Code Dynamique à partir du numéro de Ligne Appelante et de la règle d'extraction préalablement notifiée;
- Transmission par l'Utilisateur du Code Dynamique ainsi extrait au serveur du Service en Ligne, au moyen de son terminal réseau;
- A réception du Code Dynamique par le serveur du Service en Ligne, comparaison entre le Code Dynamique obtenu localement, et le Code Dynamique transmis par l'Utilisateur, et en cas d'égalité de deux Codes Dynamiques, validation du Code Dynamique transmis par l'Utilisateur.

Selon l'invention, afin que l'Utilisateur sache qu'il va recevoir un Code Dynamique, un avis d'appel est envoyé au terminal réseau de l'Utilisateur, d'une part pour indiquer qu'un Code Dynamique est intégré au numéro de Ligne Appelante utilisé par le Serveur de Codes pour appeler le téléphone de l'Utilisateur, et d'autre part pour communiquer la règle d'extraction du Code Dynamique à partir du numéro de Ligne Appelante.

Avantageusement, l'avis transmis au terminal réseau de l'Utilisateur comporte des instructions de ne pas répondre à l'appel provenant de la Ligne Appelante. Ceci permet de faire afficher le numéro de Ligne Appelante incluant le Code Dynamique, sans générer de coûts de communication.

Alternativement, le Serveur de Codes est programmé pour couper la communication téléphonique émise depuis la Ligne Appelante vers le téléphone de l'Utilisateur dès la première sonnerie, ce qui permet d'atteindre le même résultat.

De préférence, le numéro de Ligne Appelante sélectionné parmi les Lignes Disponibles selon les paramètres fournis au Serveur de codes, n'est valide que pendant une durée limitée, typiquement de l'ordre de quelques minutes, afin d'accroître la sécurité liée à l'usage du Code Dynamique.

Le procédé selon l'invention est mis en oeuvre en partie par un module logiciel spécifique intégré au serveur du Service en Ligne, et qui met en oeuvre les étapes suivantes :
- Réception de la part d'un terminal d'Utilisateur, d'une demande d'accès au Service en Ligne hébergé par le serveur informatique;
- Elaboration de la spécification du Code Dynamique, sous forme d'une série de paramètres, en fonction de l'Utilisateur et de l'usage qui sera fait du Code Dynamique, et élaboration de la règle d'extraction du Code Dynamique à partir du numéro de Ligne Appelante ;
- Transmission d'une demande de Code Dynamique, spécifiée par un ensemble de paramètres, au Serveur de Codes;
- Réception d'un numéro de Ligne Appelante, en provenance du Serveur de Codes;
- Extraction locale au niveau du serveur du Service en Ligne, du Code Dynamique à partir du numéro de Ligne Appelante ;
- Réception du Code Dynamique transmis par le terminal Utilisateur;
- Comparaison du Code Dynamique de référence extrait localement, et du Code Dynamique transmis par le terminal Utilisateur, et en cas d'égalité des deux codes, le Code Dynamique de l'Utilisateur est déclaré valide par le Service en Ligne et l'accès de l'Utilisateur au Service en Ligne est autorisé ; dans le cas contraire, un message d'erreur est préparé par le module logiciel du Service en Ligne pour affichage sur le terminal réseau de l'Utilisateur.

Le procédé selon l'invention est également mis en oeuvre en partie par un autre module logiciel intégré au Serveur de Codes et mettant en oeuvre les étapes suivantes :
- Réception de la demande de Code Dynamique et des paramètres le spécifiant, transmise par le logiciel du serveur opérant le Service en Ligne ;
- Sélection d'une Ligne Appelante parmi les Lignes Disponibles, en fonction de la demande de Code Dynamique transmise par le logiciel du serveur opérant le Service en Ligne, et des paramètres y associés;
- Emission d'un appel téléphonique à partir de la Ligne Appelante, vers le numéro de téléphone de l'Utilisateur ;
- Transmission du numéro de la Ligne Appelante, au logiciel du Service en Ligne, puis retour au début en attendant la prochaine demande de Code Dynamique.

L'invention a également pour objet un système pour la fourniture à l'Utilisateur d'un Service en Ligne d'un Code Dynamique par l'intermédiaire d'un téléphone, dans lequel ledit Utilisateur fournit d'une part un identifiant à un serveur informatique opérant un Service en Ligne, et d'autre part un Code Dynamique destiné à être utilisé par l'Utilisateur auprès du Service en Ligne, ledit système comportant :
- un terminal réseau connecté audit serveur informatique par un réseau numérique;
- un téléphone d'Utilisateur apte à afficher le numéro de téléphone d'une Ligne Appelante ;

Ledit système étant caractérisé en ce qu'il comporte en outre :
- un serveur informatique opérant un Service en Ligne ;
- un Serveur de Codes relié audit serveur informatique par une liaison numérique sécurisée;
- ledit serveur informatique comportant un module logiciel apte à spécifier une demande de Code Dynamique sous forme d'une série de paramètres, en fonction de l'Utilisateur et de l'usage du Code Dynamique, à élaborer une règle d'extraction du Code Dynamique et à transmettre au Serveur de Codes une telle demande de Code Dynamique ;
- ledit Serveur de Codes comportant un module logiciel apte à sélectionner une Ligne Appelante parmi un ensemble de Lignes Disponibles dont le numéro satisfait aux paramètres soumis dans la demande de Code Dynamique, à appeler le téléphone de l'Utilisateur depuis la Ligne Appelante et à transmettre audit serveur informatique le numéro de la Ligne Appelante ;
- ledit module logiciel du serveur informatique du Service en Ligne étant en outre apte à comparer le Code Dynamique extrait du numéro de la Ligne Appelante reçue du Serveur de Codes, et un Code Dynamique reçu du terminal réseau de l'Utilisateur.

### DESCRIPTION DE L'INVENTION

L'invention sera mieux comprise en se référant à la description qui suit ainsi qu'aux figures ci-jointes, dans lesquelles :
- la figure 1 représente un schéma de principe d'un système apte à mettre en oeuvre le procédé selon l'invention ;
- la figure 2 représente un organigramme global du procédé selon l'invention, faisant apparaître l'ensemble des éléments du système mettant en oeuvre les différentes étapes, y compris le Terminal Réseau et le Téléphone de l'Utilisateur ;
- la figure 3 représente un organigramme des étapes du procédé selon l'invention, telles que mises en oeuvre par le Service en Ligne et par le Serveur de Codes.

La description suivante du procédé selon l'invention est faite dans le cadre de l'usage classique manuel d'un Code Dynamique pour permettre l'accès à un site de Services en ligne, sans que ce cadre n'ait aucun caractère limitatif. Il est entendu que le procédé ainsi décrit est utilisable dans bien d'autres circonstances, par exemple, sans que cette liste soit exhaustive :
- pour réaliser l'authentification d'utilisateurs dans le cas de l'accès à des services numériques, le Code Dynamique constitue alors un des facteurs d'authentification ;
- pour valider une action et s'assurer que l'auteur est bien celui qu'il prétend être, comme cela est utile pour valider une transaction bancaire en ligne ;
- pour fournir un aléa, un challenge ou un défi à une application quelconque installée sur le téléphone de l'Utilisateur, comme par exemple une application de signature numérique.

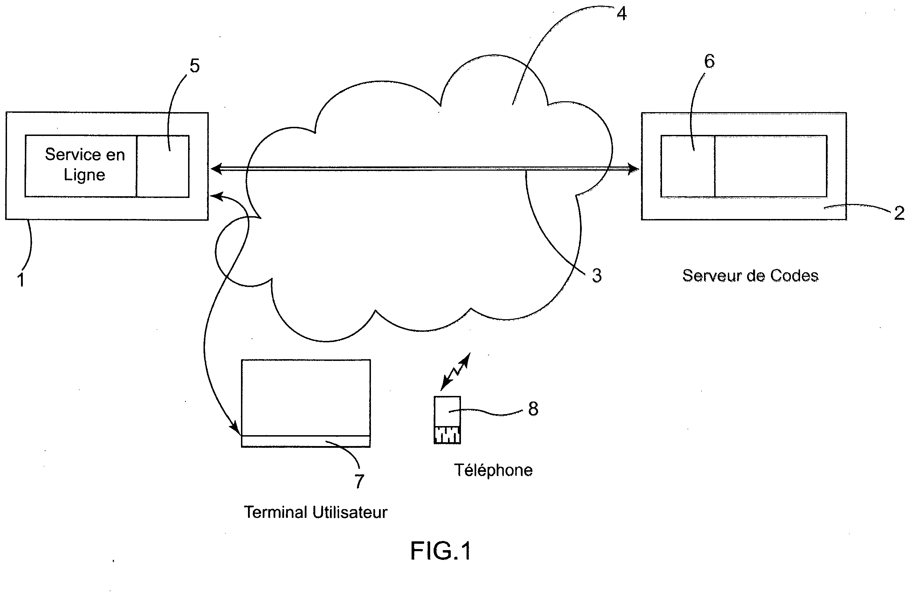

On se réfère à la figure 1. Le procédé met en oeuvre un Service en Ligne qui est exécuté par un serveur informatique 1, un serveur de codes 2 connecté au serveur informatique 1 par l'intermédiaire d'une liaison numérique 3 sécurisée, fournie par exemple par un réseau 4 de type Internet. Le Serveur informatique 1 est un serveur comme il en existe des milliers, à ceci près qu'il héberge une application logicielle spécifique, notée 5, apte à mettre en oeuvre, avec les autres composants du système, le procédé selon l'invention, qui sera décrit plus loin.

De façon similaire, le Serveur de Codes 2 héberge une application logicielle spécifique, notée 6, apte à mettre en oeuvre le procédé selon l'invention, en coopération avec les autres composants du système représenté en figure 1.

Il est à noter qu'il n'y a pas de limite à la nature des transactions envisagées dans le cadre du Service en Ligne, elles peuvent être commerciales ou non, de type bancaire ou autre, dans la mesure où un utilisateur doit pouvoir fournir un Code Dynamique au Service en Ligne, à la demande de celui-ci.

En outre, du côté de l'Utilisateur, le procédé selon l'invention met en oeuvre d'une part un terminal réseau 7 et d'autre part un téléphone 8, qui peut être un téléphone mobile classique, ou un téléphone fixe pourvu d'un afficheur, ou encore un dispositif informatique pourvu d'une fonction modem.

Le terminal réseau 7 est également connecté au serveur informatique 1 à travers le réseau numérique 4, afin que l'Utilisateur puisse dialoguer avec le Service en Ligne, notamment pour lui fournir son identifiant et son mot de passe sous la forme d'un Code Dynamique.

Pour pouvoir utiliser le procédé, le Service en Ligne peut au préalable avoir enregistré le N° de téléphone de l'Utilisateur.

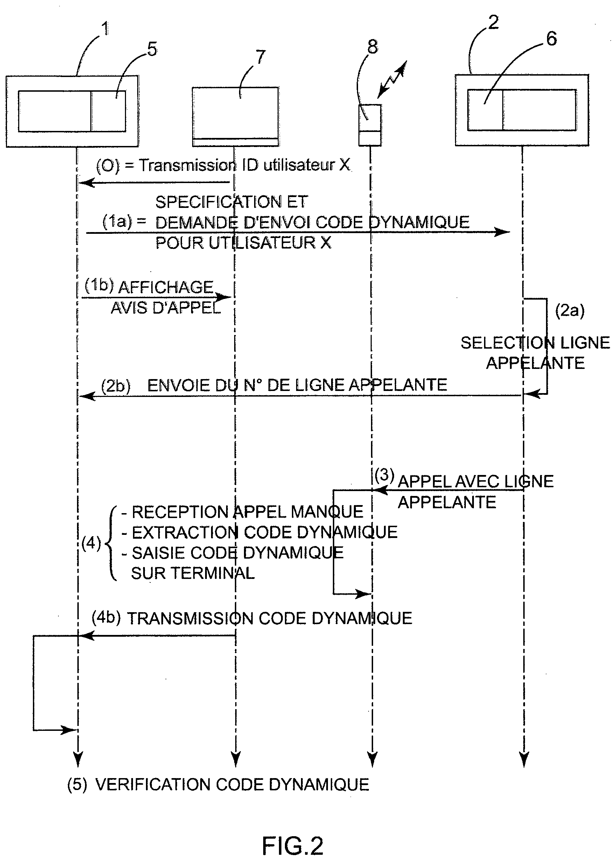

On va maintenant décrire de façon plus détaillée à travers un exemple illustré dans la figure 2, le procédé de fourniture d'un Code Dynamique conforme à l'invention.

Etape préliminaire (0) : Transmission par l'Utilisateur de son identifiant au Service en Ligne : lorsque L'Utilisateur va vouloir se connecter au Service en Ligne, il saisit son identifiant sur l'interface utilisateur du terminal réseau 7, qui le transmet via le réseau 4 au serveur informatique 1 hébergeant le Service en Ligne.

Etape 1a : à la demande du Service en Ligne, détermination des paramètres de spécification du Code Dynamique et élaboration d'une règle d'extraction par l'application logicielle 5 et transmission de la demande d'envoi de Code Dynamique à l'application logicielle 6 hébergée par le Serveur de Codes 2 ;

La demande d'envoi de Code Dynamique peut varier en fonction des besoins de l'application installée sur le Serveur en Ligne.

Selon l'utilisation qui va être faite du Code Dynamique, le Service en Ligne va définir à l'aide d'un algorithme approprié mis en oeuvre par son logiciel applicatif, le type de code qu'il souhaite fournir à l'Utilisateur en spécifiant un certain nombre de paramètres qui sont autant de contraintes auxquelles devra satisfaire le Code Dynamique.

A titre d'exemple non limitatif, les paramètres utilisés pour spécifier le type de code à fournir à l'Utilisateur comprendront les paramètres suivants :
P0 : ce paramètre concerne l'identifiant de l'Utilisateur (si celui-est enregistré auprès du Serveur de Codes), ou son numéro de téléphone.
P1 : ce paramètre concerne le nombre N de chiffres que doit contenir le Code Dynamique, typiquement N est généralement compris entre 3 et 9 ;
P2 : ce paramètre détermine le type d'extraction du Code Dynamique à partir du numéro de Ligne Appelante. Cette extraction sera manuelle par l'utilisateur, à partir du numéro de Ligne Appelante affichée sur son téléphone, ou automatique et réalisée par une application spécifique installée sur le téléphone de l'Utilisateur.
P3 : ce paramètre détermine le cas échéant d'éventuelles valeurs imposées, à savoir les valeurs des chiffres qui doivent apparaître dans le Code Dynamique, si cela est requis par le Service en Ligne. Cela peut être une seule valeur imposée, par exemple le premier chiffre C1 du Code Dynamique doit être égal à 0. Il peut aussi y avoir une contrainte mise par le Service en Ligne sur tous les chiffres du Code Dynamique, dans ce cas c'est le Code Dynamique en entier qui est déterminé. Par exemple pour un code à 4 chiffres, N=4 et un Code Dynamique imposé à 1234 pour une transaction donnée.
P4 : ce paramètre définit la règle d'extraction requise. La règle d'extraction définit dans quelle position doit se situer chaque chiffre Ci du Code Dynamique dans le numéro de la ligne appelante Ci(j) ; i=1,N. Il est possible de n'avoir aucune règle d'extraction requise notamment lorsqu'aucune valeur de Ci n'est spécifiée.

Selon les besoins du Service en Ligne l'algorithme du Service en Ligne va définir le type de code à transmettre à l'utilisateur et communiquer, via une connexion sécurisée, cette requête au Serveur de Codes en spécifiant les paramètres requis (P0 ; P1 ; P2 ; P3 ; P4).

Exemple 1 : dans le cas le plus simple le Service en Ligne ne spécifie aucune contrainte pour le Code Dynamique. Dans ce cas, les paramètres indiqués par le Service en Ligne au Serveur de Codes seront : P0 ; P1=indéfini ; P2=manuelle ; P3=Aucune ; P4=Aucune. Le logiciel du Serveur de Codes exécutera alors une sélection aléatoire de numéro de Ligne Appelante parmi les Lignes Disponibles. Ce cas est celui particulièrement adapté au remplacement d'un mot de passe statique par un Code Dynamique pour un « Login ».

Au travers de l'exemple 1 on voit les avantages additionnels du procédé dûs au paramétrage de la demande de Code Dynamique par le Service en Ligne, à savoir que le Service en Ligne peut utiliser une méthode dynamique d'extraction, c'est-à-dire définir à chaque demande de Code Dynamique le nombre de chiffres constituant le Code Dynamique et la règle d'extraction. On renforce ainsi la sécurité liée à l'utilisation d'un code dynamique en introduisant des éléments aléatoires supplémentaires, en plus du caractère dynamique du code lui-même, à savoir notamment la longueur du Code Dynamique, ou sa méthode d'extraction.

L'algorithme du Service en Ligne est donc conçu à la fois pour spécifier, à l'aide des paramètres décrits précédemment, aussi bien les caractéristiques du Code Dynamique à générer par le Serveur de Codes, que son mode d'extraction.

Etape 1b : de façon sensiblement simultanée à la demande d'envoi d'un Code Dynamique en la, le programme informatique du Service en Ligne réagit à la réception de l'identifiant de l'Utilisateur, en envoyant au terminal réseau 7 de l'Utilisateur, un message à afficher, indiquant l'imminence d'un appel auquel il ne faudra pas répondre et la marche à suivre par l'Utilisateur lors de la réception de cet appel en provenance de la Ligne Appelante, c'est-à-dire en particulier comment extraire à partir du numéro de la Ligne Appelante qui s'affichera sur son téléphone, ceux des chiffres du numéro à prendre en compte pour constituer le Code Dynamique.

Par exemple, le message transmis par le Service en Ligne au téléphone de l'Utilisateur sera du type : « *Vous allez recevoir un appel téléphonique d'un numéro commençant par +331234......, ne répondez pas à cet appel et utilisez comme mot de passe les **5 derniers chiffres** de ce numéro* » ; simultanément le Service en Ligne envoie via une connexion sécurisée 3, une demande de Code Dynamique au Serveur de Codes 2 en lui fournissant l'ensemble des paramètres auxquels doit satisfaire le Code Dynamique.

Etape 2a : à réception de la demande de Code Dynamique, le logiciel spécifique 6 du Serveur de Codes 2 procède à une sélection d'une Ligne Appelante, parmi les Lignes Disponibles. Cette sélection est réalisée en fonction des paramètres indiqués par le Service en Ligne.

Le Serveur de Codes lance son algorithme de sélection de Ligne Appelante. Cet algorithme va analyser les différentes contraintes représentées par les paramètres Pi et rechercher dans l'ensemble des Lignes Disponibles celles qui peuvent satisfaire lesdits paramètres, puis réaliser le choix d'une ligne qui sera la Ligne Appelante.

On imagine que dans certains cas où le nombre de contraintes serait trop important l'algorithme puisse ne pas trouver de Ligne Appelante. Dans ce cas le Serveur de Codes indique au Service en Ligne l'impossibilité de satisfaire cette demande particulière de code et suggère par exemple un allègement des contraintes. La probabilité d'aboutir à une impossibilité sera d'autant plus faible que le nombre de Lignes Disponibles sera grand.

En cas de succès, une Ligne Appelante est sélectionnée par le Serveur de Codes qui déclenche un appel téléphonique à partir de la Ligne Appelante vers le téléphone de l'Utilisateur et communique via une connexion sécurisée le numéro de la Ligne Appelante au Service en Ligne.

Dans l'exemple 1 ci-dessus, sans contrainte, l'algorithme du Serveur de Codes va effectuer une sélection aléatoire d'une ligne parmi les Lignes Disponibles et déclencher un appel vers le téléphone de l'Utilisateur à partir de la Ligne Appelante.

Etape 2b : puis transmission par le Serveur de Codes 2 du numéro de Ligne Appelante sélectionné en 2a, au Service en Ligne qui le communique au logiciel spécifique 5 afin que celui-ci puisse ensuite vérifier le code que va saisir l'Utilisateur en réponse à l'appel de la part du Serveur de codes.

Etape 3 : ensuite, le logiciel spécifique 6 du Serveur de Codes 2 déclenche un appel téléphonique vers le téléphone 8 de l'Utilisateur, en utilisant comme numéro d'appel le numéro de Ligne Appelante précédemment (étape 2a) sélectionné.

De préférence, lorsque le logiciel 6 du Serveur de Codes 2 déclenche un appel vers le téléphone 8 de l'Utilisateur depuis la Ligne Appelante (par exemple : +33123456789), il interrompt cet appel dès la première sonnerie pour éviter que l'Utilisateur ne réponde. Ceci permet de faire s'afficher le numéro de la Ligne Appelante (contenant le Code Dynamique) sur l'afficheur du téléphone 8 de l'Utilisateur, sans que cet appel ne consomme des unités de communication.

Etape 4 : l'Utilisateur découvre l'appel entrant et le numéro de la Ligne Appelante affiché sur son Téléphone 8. Il en extrait alors le Code Dynamique. Cette extraction est faite selon les indications données précédemment (Etape 1b) dans le cadre de la demande de Code Dynamique émise par le Service en Ligne.

Ainsi, dans l'exemple choisi, il suffira à l'Utilisateur de lire les 5 derniers chiffres du numéro affiché de la Ligne Appelante. Mais bien d'autres « codifications » du Code Dynamique à l'intérieur du numéro de la Ligne Appelante sont bien entendu possibles sans sortir du cadre de la présente invention.

Lorsque l'Utilisateur dispose du Code Dynamique après son extraction, il saisit le Code Dynamique dans l'espace prévu pour la saisie du mot de passe sur son terminal réseau 7. Ainsi, dans l'exemple choisi, l'Utilisateur saisit sur son terminal réseau 7, les 5 derniers chiffres du numéro de Ligne Appelante qui est affiché sur son téléphone 8.

Bien entendu, en 4b, le terminal réseau 7 transmet le Code Dynamique saisi, au logiciel 5 du Service en Ligne.

Etape 5 : pour terminer, le logiciel 5 du Service en Ligne compare le Code Dynamique reçu via le terminal 7 de l'Utilisateur, avec celui extrait du numéro de Ligne Appelante transmis précédemment (Etape 2b) par le Serveur de Codes pour cet Utilisateur. S'il y a égalité entre les deux codes, le logiciel 5 du Service en Ligne autorise l'accès de l'Utilisateur au Service en Ligne, sinon il affiche un message indiquant à l'Utilisateur que sa tentative d'identification ou de validation a échoué.

Des variantes peuvent être mises en oeuvre à partir du schéma de base du procédé qui vient d'être décrit. Ainsi, il serait possible pour un Service en Ligne d'avoir son propre Serveur de Codes dédié, affecté à la génération de Codes Dynamiques, plutôt que d'avoir à communiquer avec un Serveur de Codes distant et indépendant.

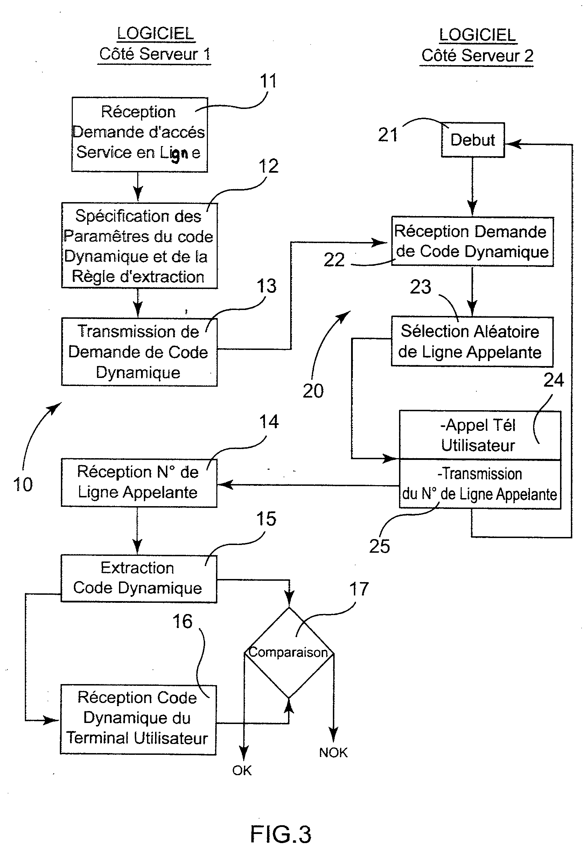

On se réfère maintenant à la figure 3 dans laquelle on a représenté l'organigramme fonctionnel simplifié des logiciels spécifiques 5 et 6 à installer respectivement dans le serveur informatique 1 hébergeant le Service en Ligne, et dans le Serveur de Codes 2, afin de pouvoir mettre en oeuvre le procédé Service en Ligne on l'invention.

Sur la partie gauche de la figure 3, on a représenté l'organigramme 10 du logiciel 5 qui doit s'exécuter dans le serveur 1 du Service en Ligne. Ce logiciel comporte les étapes suivantes :
(11) : Réception de la part d'un terminal d'Utilisateur 7, d'une demande d'accès au Service en Ligne hébergé par le serveur informatique 1 ;
(12) : Elaboration de la spécification (sous forme d'une série de paramètres) du Code Dynamique en fonction de l'Utilisateur et de l'usage qui sera fait du Code Dynamique, et détermination de la règle d'extraction à partir du numéro de Ligne Appelante ;
(13) : Transmission d'une demande de Code Dynamique, en fournissant un ensemble de paramètres auxquels le dit code doit satisfaire, au logiciel 6 du Serveur de Codes 2 ;
(14) : Réception d'un numéro de Ligne Appelante, en provenance du logiciel 6 du Serveur de Codes ;
(15) : Extraction locale du Code Dynamique à partir du numéro de Ligne Appelante ;
(16) : Réception du Code Dynamique transmis par le terminal Utilisateur 7 ;
(17) : comparaison du Code Dynamique extrait localement, et du Code Dynamique transmis par l'Utilisateur via son terminal réseau 7. En cas d'égalité des deux codes, le Code Dynamique de l'Utilisateur est déclaré valide et l'accès de l'Utilisateur au Service en Ligne est autorisé ; dans le cas contraire, un message d'erreur est préparé par le logiciel 5 et transmis au Service en Ligne pour affichage sur le Terminal Réseau de l'Utilisateur.

Sur la partie droite de la figure 3, on a représenté l'organigramme 20 du logiciel 6 qui doit s'exécuter dans le Serveur de Codes 2. Ce logiciel comporte les étapes suivantes :
Après le Début 21 :
(22) : Réception de la demande de Code Dynamique et des paramètres le spécifiant, transmise par le logiciel 5 du serveur opérant le Service en Ligne ;
(23) : Sélection d'une Ligne Appelante, parmi les Lignes Disponibles, en fonction des paramètres spécifiés dans la demande de Code Dynamique par le Service en Ligne;
(24) : Emission d'un appel téléphonique à partir de la Ligne Appelante, vers le numéro de téléphone de l'Utilisateur ;
(25) : Transmission du numéro de la Ligne Appelante, au logiciel 5 du Service en Ligne, puis retour au début (21) en attendant la prochaine demande de Code Dynamique.

Le logiciel du Serveur de Codes met en oeuvre un algorithme de détermination du numéro de la Ligne Appelante, parmi les Lignes Disponibles, en fonction des paramètres de la demande de code qui a été reçue du Service en Ligne.

Pour éviter que la transmission du Code Dynamique à l'Utilisateur ne génère des coûts de communication, une première alternative consiste à ce que l'avis d'appel émis par le Service en Ligne demande à l'Utilisateur de ne pas répondre à l'appel de la Ligne Appelante, comme décrit plus haut. En variante ou en complément, il est avantageusement prévu que l'appel réalisé depuis la Ligne Appelante par le Serveur de codes soit interrompu par le Serveur de codes lui-même dès la première sonnerie, de manière à éviter que l'Utilisateur ne réponde, sachant que le numéro d'appel restera de toute manière affiché sur l'écran du téléphone de l'Utilisateur.

Dans tous les modes de réalisation du procédé selon l'invention, il est avantageux d'attribuer une durée de validité au Code Dynamique. Cette durée peut typiquement être fixée à quelques minutes.

Il peut aussi être avantageux pour le serveur de codes de faire en sorte que ses lignes aient une partie de leur numéro commune, par exemple +33999------.

De ce fait, l'ergonomie du procédé sera améliorée, car lorsque l'Utilisateur sera habitué à ce procédé il reconnaitra rapidement un appel de la part du Serveur de Codes et ne sera pas tenté d'y répondre.

Dans un autre mode de réalisation, le Code Dynamique, inclus dans le numéro de la Ligne Appelante, va être lu automatiquement et exploité par une application installée sur le téléphone de l'Utilisateur.

Ce type de réalisation est particulièrement bien adapté dans une situation où un utilisateur dispose d'une application installée sur son téléphone, et où l'utilisation de celle-ci nécessite la fourniture d'un Code Dynamique. Dans ce cas l'application sera elle-même adaptée de manière à capturer automatiquement le Code Dynamique inclus dans le numéro de la Ligne Appelante.

A titre d'exemple cela peut correspondre à la situation d'un utilisateur de banque en ligne à qui le site de banque en ligne va demander de réaliser la signature numérique d'une transaction, à l'aide de son application de signature préalablement installée sur son téléphone et requérant un Code Dynamique.

Le procédé est identique à celui déjà décrit jusqu'à l'étape d'extraction par l'Utilisateur. Dans les paramètres de spécification du Code Dynamique, le Service en Ligne indique un mode d'utilisation automatique en P2 et spécifie les paramètres P3 et P4 de sorte que l'application installée sur le téléphone de l'Utilisateur puisse extraire Code Dynamique. A ce stade l'Utilisateur lance sur son téléphone l'application qui va utiliser le Code Dynamique. L'application va alors soit consulter le registre des appels entrants et sélectionner le dernier numéro (celui de la Ligne Appelante) ou demander à l'Utilisateur quel numéro d'appel entrant elle doit prendre en considération. Une fois cette sélection faite, l'application extrait automatiquement le Code Dynamique du numéro de la Ligne Appelante et réalise les taches pour les quelles elle a été prévue.

### AVANTAGES DE L'INVENTION

Le procédé selon l'invention permet de répondre aux buts fixés, et comporte plusieurs avantages décisifs par rapport aux procédés connus de génération et de fourniture de codes à usage unique.

A la différence des procédés connus, le Code Dynamique ne sera pas généré dans le téléphone mobile lui-même, ce qui imposerait la présence à bord d'un logiciel spécifique dédié à cette fonction.

Le Code Dynamique ne sera pas non plus généré par le serveur du Service en Ligne puis transmis à l'Utilisateur par l'intermédiaire d'un appel vocal ou SMS classique, car cela induirait des coûts de communication pour le Service en Ligne ou pour l'Utilisateur, que l'invention a pour objectif de faire disparaître. Au contraire, dans le procédé selon l'invention, l'envoi du Code Dynamique à l'Utilisateur ne génère aucun coût puisqu'il n'y a pas de réponse à l'appel effectué par le Serveur de Codes.

En outre, ce procédé fonctionne avec tous les téléphones mobiles existants sans aucune exception, et même avec des téléphones fixes qui disposent d'un afficheur, ou avec des systèmes informatiques pourvus d'un modem et émulant le fonctionnement d'un téléphone. En conséquence, ce nouveau procédé est utilisable par le plus grand nombre des abonnés aux services de téléphonie. Dans la plupart des cas envisagés en pratique, le Code Dynamique sera fourni à l'Utilisateur par l'intermédiaire de son téléphone mobile, ce qui permet d'utiliser l'immense base déjà installée de téléphones mobiles.

## Revendications

1. Procédé de fourniture à l'Utilisateur d'un Service en Ligne, d'un Code Dynamique par l'intermédiaire d'un téléphone (8), dans lequel ledit Utilisateur fournit d'une part un identifiant à un serveur informatique (1) opérant un Service en Ligne, au moyen d'un terminal réseau (7) connecté audit serveur informatique (1) par un réseau numérique (4) et d'autre part un Code Dynamique destiné à être utilisé auprès du Service en Ligne, ledit procédé comportant une phase de génération du Code Dynamique et une phase de transport du Code Dynamique vers le téléphone (8) de l'Utilisateur, **caractérisé en ce que**, pour générer le Code Dynamique :
∘ on sélectionne, à l'aide d'un algorithme et d'un ensemble de paramètres inclus dans une Demande de Code Dynamique transmise par le Service en Ligne à un Serveur de Codes (2), le numéro d'une Ligne Appelante parmi un ensemble de Lignes Disponibles pour appeler le téléphone (8) de l'Utilisateur ;
∘ puis le Serveur de Codes (2) détermine le Code Dynamique à partir dudit numéro de Ligne Appelante, à l'aide d'une règle d'extraction du Code Dynamique, qui désigne les chiffres du numéro de téléphone de la Ligne Appelante à prendre en compte pour constituer le Code Dynamique ;
le procédé étant **caractérisé en outre en ce que**, pour transmettre le Code Dynamique à l'Utilisateur sans échange de message SMS :
∘ on envoie au moyen du Service en Ligne un avis d'appel au terminal réseau (7) de l'Utilisateur, ainsi que la règle d'extraction du Code Dynamique à partir du numéro d'appel ;
∘ on déclenche un appel téléphonique vers le téléphone (8) de l'Utilisateur en utilisant le numéro de Ligne Appelante préalablement sélectionnée, cet appel étant interrompu dès lors que le numéro de la Ligne Appelante, qui intègre ledit Code Dynamique, s'affiche sur le téléphone de l'Utilisateur ;
∘ on extrait ledit Code Dynamique à partir du numéro de Ligne Appelante, en utilisant la règle d'extraction préalablement communiquée.

2. Procédé selon la revendication 1, **caractérisé en ce que** pour un choix particulier des paramètres inclus dans la demande de Code Dynamique, la détermination du numéro de Ligne Appelante par le Serveur de Codes (2) est réalisée par une sélection aléatoire du numéro de la Ligne Appelante parmi les numéros de Lignes Disponibles pour le Serveur de Codes (2).

3. Procédé selon la revendication 1 ou la revendication 2, **caractérisé en ce que** la règle d'extraction du Code Dynamique est soit fixe, soit définie par le Service en Ligne à l'occasion de chaque demande de Code Dynamique.

4. Procédé selon la revendication 3, **caractérisé en ce que** la règle d'extraction consiste à prendre les 4, 5 ou 6 derniers chiffres du numéro de la Ligne Appelante pour constituer le Code Dynamique.

5. Procédé selon l'une des revendications précédentes, **caractérisé en ce que** l'extraction du Code Dynamique à partir du numéro de Ligne Appelante, en fonction de ladite règle d'extraction, est soit effectuée manuellement par l'Utilisateur soit effectuée automatiquement par une application logicielle installée sur le téléphone de l'Utilisateur.

6. Procédé selon l'une des revendications 2 à 5, **caractérisé en ce qu'**en cas d'extraction manuelle du Code Dynamique par l'Utilisateur, les chiffres du Code Dynamique sont d'abord choisis par l'Utilisateur à partir de l'affichage du numéro de la Ligne Appelante sur le Téléphone de l'Utilisateur, en fonction de la règle d'extraction communiquée par le Service en Ligne à l'Utilisateur, puis saisis sur le terminal réseau (7) de l'Utilisateur et communiqués au logiciel du Service en Ligne.

7. Procédé selon l'une des revendications 2 à 5, **caractérisé en ce qu'**en cas d'extraction automatique du Code Dynamique à partir du numéro de téléphone de la Ligne Appelante, le téléphone de l'Utilisateur est pourvu d'un logiciel apte à lire le numéro de la Ligne Appelante, et à en extraire le Code Dynamique en fonction d'une règle d'extraction prédéfinie dans ledit logiciel, ou communiquée par le Service en Ligne au téléphone (8) de l'Utilisateur.

8. Procédé selon l'une quelconque des revendications 1 à 7, **caractérisé en ce qu'**il comporte les étapes suivantes :
- (1a) transmission par le Service en Ligne audit Serveur de codes (2), d'une demande d'envoi d'un Code Dynamique à un Utilisateur donné auprès du Service en Ligne, ainsi que d'un ensemble de paramètres spécifiant le Code Dynamique ;
- (1b) transmission par le Service en Ligne d'un avis d'appel envoyé au terminal réseau (7) de l'Utilisateur ;
- après la sélection (2a) par le Serveur de Codes d'un numéro de téléphone de Ligne Appelante, transmission (2b) par le Serveur de Codes du numéro de Ligne Appelante ainsi sélectionnée au serveur (1) du Service en Ligne, et extraction par ledit serveur (1), du Code Dynamique à partir du numéro de Ligne Appelante ;
- (3) : déclenchement d'un appel téléphonique par le Serveur de Codes (2) vers le téléphone (8) de l'Utilisateur, en utilisant le numéro de Ligne Appelante préalablement sélectionnée ;
- (4a) à réception de l'appel téléphonique par le téléphone (8) de l'Utilisateur, extraction manuelle ou automatique du Code Dynamique à partir du numéro de Ligne Appelante et de la règle d'extraction préalablement notifiée ;
- (4b) transmission par l'Utilisateur du Code Dynamique ainsi extrait au serveur (1) du Service en Ligne, au moyen de son terminal réseau (7) ;
- (5) à réception du Code Dynamique par le serveur (1) du Service en Ligne, comparaison entre le Code Dynamique obtenu localement, et le Code Dynamique transmis par l'Utilisateur, et en cas d'égalité de deux Codes Dynamiques, validation du Code Dynamique transmis par l'Utilisateur.

9. Procédé selon la revendication 8, **caractérisé en ce que** l'avis d'appel est envoyé au terminal réseau (7) de l'Utilisateur, d'une part pour le prévenir d'un appel émanant de la Ligne Appelante dont le numéro contient le Code Dynamique, et d'autre part pour communiquer à l'Utilisateur la règle d'extraction du Code Dynamique à partir du numéro de la Ligne Appelante.

10. Procédé selon la revendication 9, **caractérisé en ce que** l'avis d'appel transmis au terminal réseau (7) de l'Utilisateur comporte des instructions de ne pas répondre à l'appel provenant de la Ligne Appelante.

11. Procédé selon la revendication 10, **caractérisé en ce que** le Serveur de Codes (2) est programmé pour couper la communication téléphonique émise depuis la Ligne Appelante vers le téléphone (8) de l'Utilisateur dès la première sonnerie.

12. Procédé selon l'une quelconque des revendications précédentes, **caractérisé en ce que** le numéro de Ligne Appelante sélectionné parmi les Lignes Disponibles du Serveur de codes, n'est valide que pendant une durée limitée, de l'ordre de quelques minutes.

13. Procédé selon l'une des revendications 2 à 12, **caractérisé en ce que** le logiciel (5) du Service en Ligne met en oeuvre les étapes suivantes :
(11) : Réception de la part d'un terminal d'Utilisateur (7), d'une demande d'accès au Service en Ligne hébergé par le serveur informatique (1) ;
(12) : Elaboration de la spécification du Code Dynamique, sous forme d'une série de paramètres, en fonction de l'Utilisateur et de l'usage qui sera fait du Code Dynamique, et élaboration de la règle d'extraction du Code Dynamique à partir du numéro de Ligne Appelante ;
(13) : Transmission d'une demande de Code Dynamique au Serveur de Codes (2) et d'un ensemble de paramètres spécifiant le Code Dynamique ;
(14) : Réception d'un numéro de Ligne Appelante, en provenance du Serveur de Codes (2) ;
(15) : Extraction locale au niveau du serveur (1) du Service en Ligne, du Code Dynamique à partir du numéro de Ligne Appelante ;
(16) : Réception du Code Dynamique transmis par le terminal Utilisateur (7) ;
(17) Comparaison du Code Dynamique extrait localement, et du Code Dynamique transmis par le terminal Utilisateur (7), et en cas d'égalité des deux codes, le Code Dynamique de l'Utilisateur est déclaré valide par le Service en Ligne et l'accès de l'Utilisateur au Service en Ligne est autorisé ; dans le cas contraire, un message d'erreur est préparé par le logiciel (5) du Service en Ligne pour affichage sur le terminal réseau (7) de l'Utilisateur.

14. Procédé selon l'une quelconque des revendications 2 à 12, **caractérisé en ce que** le logiciel (6) du Serveur de Codes (2) met en oeuvre les étapes suivantes :
(22) : Réception de la demande de Code Dynamique transmise par le logiciel (5) du serveur (1) opérant le Service en Ligne, et des paramètres y associés ;
(23) : Sélection d'une Ligne Appelante parmi les Lignes Disponibles, en fonction de la demande de Code Dynamique transmise par le logiciel (5) du serveur (1) opérant le Service en Ligne, et des paramètre y associés ;
(24) : Emission d'un appel téléphonique à partir de la Ligne Appelante ainsi sélectionnée, vers le numéro de téléphone de l'Utilisateur ;
(25) : Transmission du numéro de la Ligne Appelante au logiciel (5) du Service en Ligne, puis retour au début (21) en attendant la prochaine demande de Code Dynamique.

15. Système pour la fourniture à l'Utilisateur d'un Service en Ligne d'un Code Dynamique par l'intermédiaire d'un téléphone (5), dans lequel ledit Utilisateur fournit d'une part un identifiant à un serveur informatique (1) opérant un Service en Ligne, et d'autre part un Code Dynamique obtenu selon le procédé conforme à l'une quelconque des revendications 1 à 14, et destiné à être utilisé par l'Utilisateur auprès du Service en Ligne, ledit système comportant :
- un terminal réseau (7) connecté audit serveur informatique (1) par un réseau numérique (4) ;
- un téléphone d'Utilisateur (8) apte à afficher le numéro de téléphone d'une Ligne Appelante ;
ledit système étant **caractérisé en ce qu'**il comporte en outre :
- un serveur informatique (1) opérant un Service en Ligne ;
- un Serveur de Codes (2) relié audit serveur informatique (1) par une liaison numérique sécurisée (3) ;
- ledit serveur informatique (1) opérant le Service en Ligne comportant un module logiciel (5) apte à transmettre au Serveur de Codes (2) une demande de Code Dynamique ;
- ledit serveur informatique comportant un module logiciel apte à spécifier une demande de Code Dynamique sous forme d'une série de paramètres, en fonction de l'Utilisateur et de l'usage du Code Dynamique, à élaborer une règle d'extraction du Code Dynamique et à transmettre au Serveur de Codes une telle demande de Code Dynamique ;
- ledit Serveur de Codes comportant un module logiciel apte à sélectionner une Ligne Appelante parmi un ensemble de Lignes Disponibles dont le numéro satisfait aux paramètres soumis dans la demande de Code Dynamique, à appeler le téléphone de l'Utilisateur depuis la Ligne Appelante et à transmettre audit serveur informatique le numéro de la Ligne Appelante ;
- ledit module logiciel du serveur informatique du Service en Ligne étant en outre apte à comparer le Code Dynamique extrait du numéro de la Ligne Appelante reçue du Serveur de Codes, et un Code Dynamique reçu du terminal réseau de l'Utilisateur.

## Patentansprüche

1. Verfahren zur Bereitstellung eines dynamischen Codes an den Benutzer eines Onlinedienstes über ein Telefon (8), wobei der Benutzer einerseits eine Kennung einem Computerserver (1), der einen Onlinedienst betreibt, mittels eines Netzwerkendgeräts (7) bereitstellt, das über ein digitales Netzwerk (4) mit dem Computerserver (1) verbunden ist, und andererseits einen dynamischen Code, der dazu bestimmt ist, bei dem Onlinedienst genutzt zu werden, wobei das Verfahren eine Erzeugungsphase des dynamischen Codes und eine Transportphase des dynamischen Codes zu dem Telefon (8) des Benutzers aufweist, **dadurch gekennzeichnet, dass** zur Erzeugung des dynamischen Codes:
o mithilfe eines Algorithmus und eines Satzes von Parametern, die in einer Anforderung Dynamischen Codes enthalten sind, die durch den Onlinedienst an einen Code-Server (2) übertragen wird, die Nummer einer Anrufenden Leitung aus einer Menge Verfügbarer Leitungen ausgewählt wird, um das Telefon (8) des Benutzers anzurufen;
o dann der Code-Server (2) den dynamischen Code anhand der Nummer der anrufenden Leitung mithilfe einer Extraktionsregel des Dynamischen Codes bestimmt, welche die Ziffern der Telefonnummer der anrufenden Leitung bezeichnet, die zur Bildung des Dynamischen Codes zu berücksichtigen sind;
wobei das Verfahren ferner **dadurch gekennzeichnet ist, dass** zur Übertragung des Dynamischen Codes an den Benutzer ohne Austausch einer SMS-Nachricht:
o mittels des Onlinedienstes eine Anrufbenachrichtigung an das Netzwerkendgerät (7) des Benutzers gesendet wird, sowie die Extraktionsregel des Dynamischen Codes anhand der Anrufnummer;
o ein Telefonanruf zu dem Telefon (8) des Benutzers mithilfe der zuvor ausgewählten Nummer der Anrufenden Leitung ausgelöst wird, wobei dieser Anruf unterbrochen wird, sobald die Nummer der Anrufenden Leitung, die den Dynamischen Code enthält, auf dem Telefon des Benutzers angezeigt wird;
o der Dynamische Code anhand der Nummer der Anrufenden Leitung mithilfe der zuvor mitgeteilten Extraktionsregel extrahiert wird.

2. Verfahren nach Anspruch 1, **dadurch gekennzeichnet, dass** für eine bestimmte Wahl der Parameter, die in der Anforderung Dynamischen Codes enthalten sind, die Bestimmung der Nummer der anrufenden Leitung durch den Code-Server (2) durch eine zufällige Auswahl der Nummer der Anrufenden Leitung aus den Nummern Verfügbarer Leitungen für den Code-Server (2) vorgenommen wird.

3. Verfahren nach Anspruch 1 oder 2, **dadurch gekennzeichnet, dass** die Extraktionsregel des Dynamischen Codes entweder fest ist oder durch den Onlinedienst bei jeder Anforderung Dynamischen Codes definiert wird.

4. Verfahren nach Anspruch 3, **dadurch gekennzeichnet, dass** die Extraktionsregel darin besteht, die 4, 5 oder 6 letzten Ziffern der Nummer der Anrufenden Leitung zu nehmen, um den Dynamischen Code zu bilden.

5. Verfahren nach einem der vorhergehenden Ansprüche, **dadurch gekennzeichnet, dass** die Extraktion des Dynamischen Codes anhand der Nummer der Anrufenden Leitung in Abhängigkeit von der Extraktionsregel entweder manuell durch den Benutzer oder automatisch durch eine Softwareanwendung, die auf dem Telefon des Benutzers installiert ist, durchgeführt wird.

6. Verfahren nach einem der Ansprüche 2 bis 5, **dadurch gekennzeichnet, dass** im Fall einer manuellen Extraktion des Dynamischen Codes durch den Benutzer die Ziffern des Dynamischen Codes zuerst durch den Benutzer anhand der Anzeige der Nummer der Anrufenden Leitung auf dem Telefon des Benutzers in Abhängigkeit von der Extraktionsregel, die dem Benutzer durch den Onlinedienst mitgeteilt wird, ausgewählt werden, dann auf dem Netzwerkendgerät (7) des Benutzers erfasst und der Software des Onlinedienstes mitgeteilt werden.

7. Verfahren nach einem der Ansprüche 2 bis 5, **dadurch gekennzeichnet, dass** im Fall einer automatischen Extraktion des Dynamischen Codes anhand der Telefonnummer der Anrufenden Leitung das Telefon des Benutzers mit einer Software versehen wird, die geeignet ist, die Nummer der Anrufenden Leitung zu lesen und daraus den Dynamischen Code in Abhängigkeit von einer Extraktionsregel zu extrahieren, die in der Software vorgegeben ist oder durch den Onlinedienst dem Telefon (8) des Benutzers mitgeteilt wird.

8. Verfahren nach einem der Ansprüche 1 bis 7, **dadurch gekennzeichnet, dass** es die folgenden Schritte umfasst:
- (1a) Übertragen, durch den Onlinedienst an den Code-Server (2), einer Anforderung des Sendes eines Dynamischen Codes an einen bestimmten Benutzer bei dem Onlinedienst sowie eines Satzes von Parametern, die den Dynamischen Code vorgeben;
- (1b) Übertragen, durch den Onlinedienst, einer Anrufbenachrichtigung, die an das Netzwerkendgerät (7) des Benutzers gesendet wird;
- nach dem Auswählen (2a) einer Telefonnummer der Anrufenden Leitung durch den Code-Server, Übertragen (2b), durch den Code-Server, der so ausgewählten Nummer der Anrufenden Leitung an den Server (1) des Onlinedienstes und Extrahieren des Dynamischen Codes anhand der Nummer der Anrufenden Leitung durch den Server (1) ;
(3): Auslösen eines Telefonanrufs durch den Code-Server (2) zu dem Telefon (8) des Benutzers mithilfe der zuvor ausgewählten Nummer der Anrufenden Leitung;
- (4a) bei Empfang des Telefonanrufs durch das Telefon (8) des Benutzers, manuelles oder automatisches Extrahieren des Dynamischen Codes anhand der Nummer der Anrufenden Leitung und der zuvor mitgeteilten Extraktionsregel;
- (4b) Übertragen, durch den Benutzer, des so extrahierten Dynamischen Codes an den Server (1) des Onlinedienstes mittels seines Netzwerkendgeräts (7);
- (5) bei Empfang des Dynamischen Codes durch den Server (1) des Onlinedienstes, Vergleichen des lokal erhaltenen Dynamischen Codes und des Dynamischen Codes, der durch den Benutzer übertragen wurde, und wenn zwei Dynamische Codes gleich sind, Validieren des Dynamischen Codes, der durch den Benutzer übertragen wurde.

9. Verfahren nach Anspruch 8, **dadurch gekennzeichnet, dass** die Anrufbenachrichtigung einerseits an das Netzwerkendgerät (7) des Benutzers gesendet wird, um ihn über einen Anruf zu benachrichtigen, der von der Anrufenden Leitung kommt, deren Nummer den Dynamischen Code enthält, und andererseits um dem Benutzer die Extraktionsregel des Dynamischen Codes anhand der Nummer der Anrufenden Leitung mitzuteilen.

10. Verfahren nach Anspruch 9, **dadurch gekennzeichnet, dass** die Anrufbenachrichtigung, die an das Netzwerkendgerät (7) des Benutzers übertragen wird, Anweisungen aufweist, nicht auf den Anruf zu antworten, der von der Anrufenden Leitung kommt.

11. Verfahren nach Anspruch 10, **dadurch gekennzeichnet, dass** der Code-Server (2) dafür programmiert ist, die Telefonkommunikation, die von der Anrufenden Leitung zu dem Telefon (8) des Benutzers emittiert wird, beim ersten Klingeln zu unterbrechen.

12. Verfahren nach einem der vorhergehenden Ansprüche, **dadurch gekennzeichnet, dass** die Nummer der Anrufenden Leitung, die aus den Verfügbaren Leitungen des Code-Servers ausgewählt ist, nur während eines begrenzten Zeitraums in der Größenordnung von einigen Minuten gültig ist.

13. Verfahren nach einem der Ansprüche 2 bis 12, **dadurch gekennzeichnet, dass** die Software (5) des Onlinedienstes die folgenden Schritte ausführt:
(11): Empfangen, seitens eines Benutzerendgeräts (7), einer Anforderung von Zugriff auf den Onlinedienst, der von dem Computerserver (1) gehostet wird;
(12): Erstellen der Vorgabe des Dynamischen Codes in Form einer Reihe von Parametern in Abhängigkeit von dem Benutzer und dem Gebrauch, der von dem Dynamischen Code gemacht wird, und Erstellen der Extraktionsregel des Dynamischen Codes anhand der Nummer der Anrufenden Leitung;
(13): Übertragen einer Anforderung Dynamischen Codes an den Code-Server (2) und eines Satzes von Parametern, die den dynamischen Code vorgeben;
(14): Empfangen einer Nummer der Anrufenden Leitung von dem Code-Server (2);
(15): Lokales Extrahieren, an dem Server (1) des Onlinedienstes, des Dynamischen Codes anhand der Nummer der Anrufenden Leitung;
(16): Empfangen des Dynamischen Codes, der von dem Benutzerendgerät (7) übertragen wird;
(17) Vergleichen des lokal extrahierten Dynamischen Codes und des Dynamischen Codes, der durch das Benutzerendgerät (7) übertragen wird, und wenn die beiden Codes gleich sind, wird der Dynamische Code des Benutzers durch den Onlinedienst für gültig erklärt, und der Zugriff des Benutzers auf den Onlinedienst wird gestattet;
anderenfalls wird durch die Software (5) des Onlinedienstes eine Fehlermeldung zur Anzeige auf dem Benutzerendgerät (7) des Benutzers vorbereitet.

14. Verfahren nach einem der Ansprüche 2 bis 12, **dadurch gekennzeichnet, dass** die Software (6) des Code-Servers (2) die folgenden Schritte ausführt:
(22): Empfangen der Anforderung Dynamischen Codes, die durch die Software (5) des Servers (1) übertragen wird, der den Onlinedienst betreibt, und der damit in Verbindung stehenden Parameter;
(23): Auswählen einer Anrufenden Leitung aus den Verfügbaren Leitungen in Abhängigkeit von der Anforderung Dynamischen Codes, die durch die Software (5) des Servers (1) übertragen wird, der den Onlinedienst betreibt, und der damit in Verbindung stehenden Parameter;
(24): Emittieren eines Telefonanrufs anhand der so ausgewählten Anrufenden Leitung zu der Telefonnummer des Benutzers;
(25): Übertragen der Nummer der Anrufenden Leitung an die Software (5) des Onlinedienstes, dann Zurückkehren zum Anfang (21) in Erwartung der nächsten Anforderung Dynamischen Codes.

15. System zur Bereitstellung eines dynamischen Codes an den Benutzer eines Onlinedienstes über ein Telefon (5), wobei der Benutzer einerseits eine Kennung einem Computerserver (1) bereitstellt, der einen Onlinedienst betreibt, und andererseits einen dynamischen Code, der gemäß dem Verfahren nach einem der Ansprüche 1 bis 14 erhalten wurde und dazu bestimmt ist, von dem Benutzer bei dem Onlinedienst genutzt zu werden, wobei das System Folgendes aufweist:
- ein Netzwerkendgerät (7), das durch ein digitales Netzwerk (4) mit dem Computerserver (1) verbunden ist;
- ein Benutzertelefon (8), das geeignet ist, die Telefonnummer einer Anrufenden Leitung anzuzeigen; wobei das System **dadurch gekennzeichnet ist, dass** es ferner Folgendes aufweist:
- einen Computerserver (1), der einen Onlinedienst betreibt;
- einen Code-Server (2), der durch eine gesicherte digitale Verbindung (3) mit dem Computerserver (1) verbunden ist;
wobei der Computerserver (1), der den Onlinedienst betreibt, ein Softwaremodul (5) aufweist, das geeignet ist, eine Anforderung Dynamischen Codes an den Code-Server (2) zu übertragen;
- wobei der Computerserver ein Softwaremodul aufweist, das geeignet ist, eine Anforderung dynamischen Codes in Form einer Reihe von Parametern in Abhängigkeit von dem Benutzer und dem Gebrauch des dynamischen Codes vorzugeben, eine Extraktionsregel des Dynamischen Codes zu erstellen und eine derartige Anforderung dynamischen Codes an den Code-Server zu übertragen;
- wobei der Code-Server ein Softwaremodul aufweist, das geeignet ist, eine Anrufende Leitung aus einer Menge Verfügbarer Leitungen auszuwählen, deren Nummer den Parametern genügt, die in der Anforderung Dynamischen Codes vorgelegt werden, das Telefon des Benutzers von der Anrufenden Leitung anzurufen und die Nummer der Anrufenden Leitung an den Computerserver zu übertragen;
- wobei das Softwaremodul des Computerservers des Onlinedienstes ferner geeignet ist, den Dynamischen Code, der aus der Nummer der Anrufenden Leitung, die von dem Code-Server empfangen wurde, extrahiert wurde, und einen Dynamischen Code, der von dem Netzwerkendgerät des Benutzers empfangen wurde, zu vergleichen.

## Claims

1. Method for supplying the user of an online service with a dynamic code via a telephone (8), in which said user supplies, on the one hand, an identifier to a computer server (1) operating an online service, by means of a network terminal (7) connected to said computer server (1) by a digital network (4), and, on the other hand, a dynamic code intended to be used with the online service, said method comprising a phase of generating the dynamic code and a phase of transferring the dynamic code to the telephone (8) of the user, **characterized in that**, to generate the dynamic code:
o the number of a calling line is selected, using an algorithm and a set of parameters included in a dynamic code request transmitted by the online service to a code server (2), from a set of available lines, with a view to calling the telephone (8) of the user;
∘ then the code server (2) determines the dynamic code from said calling line number, using a dynamic code extraction rule, which designates the digits of the telephone number of the calling line to be taken into account to make up the dynamic code;
the method furthermore being **characterized in that**, to transmit the dynamic code to the user without exchanging an SMS message:
∘ a call notification and the rule for extracting the dynamic code from the call number are sent, by means of the online service, to the network terminal (7) of the user;
∘ a telephone call to the telephone (8) of the user is initiated using the previously selected calling line number, this call being interrupted once the number of the calling line, which incorporates said dynamic code, is displayed on the telephone of the user;
∘ said dynamic code is extracted from the calling line number, using the previously communicated extraction rule.

2. Method according to Claim 1, **characterized in that**, for a particular choice of the parameters included in the dynamic code request, the determination of the calling line number by the code server (2) is made by a random selection of the number of the calling line from the numbers of available lines for the code server (2).

3. Method according to Claim 1 or Claim 2, **characterized in that** the dynamic code extraction rule is either fixed, or defined by the online service on the occasion of each dynamic code request.

4. Method according to Claim 3, **characterized in that** the extraction rule consists in taking the last 4, 5 or 6 digits of the number of the calling line to make up the dynamic code.

5. Method according to one of the preceding claims, **characterized in that** the extraction of the dynamic code from the calling line number, on the basis of said extraction rule, is either performed manually by the user, or performed automatically by a software application installed on the telephone of the user.

6. Method according to one of Claims 2 to 5, **characterized in that**, in the case of manual extraction of the dynamic code by the user, the digits of the dynamic code are firstly chosen by the user from the display of the number of the calling line on the telephone of the user, on the basis of the extraction rule communicated by the online service to the user, then input on the network terminal (7) of the user and communicated to the software of the online service.

7. Method according to one of Claims 2 to 5, **characterized in that**, in the case of automatic extraction of the dynamic code from the telephone number of the calling line, the telephone of the user is provided with software suitable for reading the number of the calling line, and for extracting the dynamic code therefrom on the basis of an extraction rule predefined in said software, or communicated by the online service to the telephone (8) of the user.

8. Method according to any one of Claims 1 to 7, **characterized in that** it also comprises the following steps:
- (1a) transmission by the online service to said code server (2) of a request to send a dynamic code to a given user with the online service, together with a set of parameters specifying the dynamic code;
- (1b) transmission by the online service of a call notification sent to the network terminal (7) of the user;
- after the selection (2a) by the code server of a calling line telephone number, transmission (2b) by the code server of the number of the duly selected calling line to the server (1) of the online service, and extraction by said server (1) of the dynamic code from the calling line number;
- (3): initiation of a telephone call by the code server (2) to the telephone (8) of the user, by using the previously selected calling line number;
- (4a) on reception of the telephone call by the telephone (8) of the user, manual or automatic extraction of the dynamic code on the basis of the calling line number and of the previously notified extraction rule;
- (4b) transmission by the user of the duly extracted dynamic code to the server (1) of the online service, by means of his or her network terminal (7);
- (5) on reception of the dynamic code by the server (1) of the online service, comparison between the locally obtained dynamic code and the dynamic code transmitted by the user, and, if the two dynamic codes match, validation of the dynamic code transmitted by the user.

9. Method according to Claim 8, **characterized in that** the call notification is sent to the network terminal (7) of the user, on the one hand to notify him or her of a call emanating from the calling line whose number contains the dynamic code, and on the other hand to communicate to the user the rule for extracting the dynamic code from the number of the calling line.

10. Method according to Claim 9, **characterized in that** the call notification transmitted to the network terminal (7) of the user comprises instructions to not answer the call originating from the calling line.

11. Method according to Claim 10, **characterized in that** the code server (2) is programmed to cut the telephone communication sent from the calling line to the telephone (8) of the user after the first ring.

12. Method according to any one of the preceding claims, **characterized in that** the calling line number selected from the available lines of the code server is valid only for a limited period, of the order of a few minutes.

13. Method according to one of Claims 2 to 12, **characterized in that** the software (5) of the online service implements the following steps:
(11): reception on behalf of a user terminal (7) of a request to access the online service hosted by the computer server (1);
(12): generation of the specification of the dynamic code, in the form of a series of parameters, on the basis of the user and of the use which will be made of the dynamic code, and generation of the rule for extracting the dynamic code from the calling line number;
(13): transmission of a dynamic code request to the code server (2) and of a set of parameters specifying the dynamic code;
(14): reception of a calling line number, from the code server (2);
(15): local extraction on the server (1) of the online service, of the dynamic code from the calling line number;
(16): reception of the dynamic code transmitted by the user terminal (7);
(17): comparison of the locally extracted dynamic code, and of the dynamic code transmitted by the user terminal (7), and if the two codes match, the dynamic code of the user is declared valid by the online service and the access of the user to the online service is authorized; otherwise, an error message is prepared by the software (5) of the online service for display on the network terminal (7) of the user.

14. Method according to any one of Claims 2 to 12, **characterized in that** the software (6) of the code server (2) implements the following steps:
(22): reception of the dynamic code request transmitted by the software (5) of the server (1) operating the online service, and of the parameters associated therewith;
(23): selection of a calling line from the available lines, on the basis of the dynamic code request transmitted by the software (5) of the server (1) operating the online service, and of the parameters associated therewith;
(24): sending of a telephone call from the duly selected calling line to the telephone number of the user;
(25): transmission of the number of the calling line to the software (5) of the online service, then return to the start (21) pending the next dynamic code request.

15. System for supplying the user of an online service with a dynamic code via a telephone (5), in which said user supplies, on the one hand, an identifier to a computer server (1) operating an online service, and, on the other hand, a dynamic code obtained using the method according to any one of Claims 1 to 14 and intended to be used by the user with the online service, said system comprising:
- a network terminal (7) connected to said computer server (1) by a digital network (4);
- a user telephone (8) suitable for displaying the telephone number of a calling line;
said system being **characterized in that** it also comprises:
- a computer server (1) operating an online service;
- a code server (2) linked to said computer server (1) by a secure digital link (3);
- said computer server (1) operating the online service comprising a software module (5) suitable for transmitting a dynamic code request to the code server (2) ;
- said computer server comprising a software module suitable for specifying a dynamic code request in the form of a series of parameters, on the basis of the user and of the use of the dynamic code, for generating a rule for extracting the dynamic code and for transmitting such a dynamic code request to the code server;
- said code server comprising a software module suitable for selecting a calling line from a set of available lines for which the number satisfies the parameters submitted in the dynamic code request, for calling the telephone of the user from the calling line and for transmitting the number of the calling line to said computer server;
- said software module of the computer server of the online service also being suitable for comparing the dynamic code extracted from the number of the calling line received from the code server, and a dynamic code received from the network terminal of the user.
